# FASCICULE DE BREVET EUROPEEN

(11) **EP 3 853 109 B1**
(45) Date de publication et mention de la délivrance du brevet: **22.06.2022**
(21) Numéro de dépôt: 19769452.4
(22) Date de dépôt: 13.09.2019
(51) Int. Cl.: B62D 21/15, B62D 43/10, B62D 29/04, B62D 25/20, B60K 15/063

(54) **VEHICULE AUTOMOBILE COMPRENANT DES MOYENS D'ACCROCHAGE SOUS LE PLANCHER ARRIERE POUR LIMITER L'ENFONCEMENT EN CAS DE CHOC**
KRAFTFAHRZEUG MIT BEFESTIGUNGSMITTELN UNTER DEM HINTEREN BODEN ZUR BEGRENZUNG DER VERTIEFUNG BEI EINEM AUFPRALL
MOTOR VEHICLE COMPRISING FASTENING MEANS UNDER THE REAR FLOOR FOR LIMITING DEPRESSION IN THE EVENT OF AN IMPACT

(30) Priorité: 21.09.2018 FR 1871074
(43) Date de publication de la demande: 28.07.2021
(73) Titulaire: Renault s.a.s, 92100 Boulogne Billancourt (FR)
(72) Inventeur: MIOT, David, 35420 LOUVIGNE DU DESERT (FR); VINIAL, Christophe, 91220 LE PLESSIS PATE (FR)
(74) Mandataire: Renault Group
(86) Numéro de dépôt international: PCT/EP2019/074546
(87) Numéro de publication internationale: WO 2020/058129

(56) Documents cités:
- JP-A- H03 182 884
- JP-A- 2013 216 206
- US-A1- 2009 195 030
- US-A1- 2011 227 367
- US-A1- 2017 210 217

## Description

La présente invention concerne un véhicule automobile comprenant un soubassement pourvu d'un plancher arrière sur lequel peut être reçue une roue de secours, le véhicule comprenant également un réservoir à carburant situé à l'avant du plancher arrière.

Sur de nombreux véhicules automobiles connus, une roue de secours est classiquement située dans un logement formé sur le plancher arrière, la roue étant située au-dessus de ce plancher. Cependant elles sont généralement inclinées vers l'avant du véhicule, c'est-à-dire ont une partie avant plus basse que leur partie arrière, et sont généralement en position basse, aux limites de la garde au sol du véhicule. Le but est d'assurer l'intégrité du réservoir à carburant pour satisfaire les objectifs réglementaires en situation de choc arrière. En effet le réservoir est souvent situé à l'avant de la roue de secours, si l'on considère la direction longitudinale avant-arrière du véhicule et ne doit pas être contraint pas l'avancée de la roue de secours lors d'un choc subi à l'arrière du véhicule, qui tend à repousser tous les éléments vers l'avant.

Lors d'un choc arrière sur les véhicules connus de ce type, la roue de secours passe alors sous la partie arrière du réservoir et vient ensuite buter sur la traverse de train arrière. L'intégrité sécuritaire du réservoir à carburant est donc préservée.

Mais de nouvelles situations et contraintes d'architectures imposent de disposer la roue de secours ou une galette équivalente à un niveau plus haut, et à l'horizontale, ce qui a de fait une incidence critique sur le réservoir à carburant lors d'un choc arrière. En effet, lors d'un choc arrière, la roue se déplace en vis à vis direct de la partie arrière du réservoir à carburant et d'une traverse de soubassement. Ces nouvelles contraintes d'architecture peuvent également conduire à installer un autre équipement dans le logement de la roue de secours, sur le plancher arrière, par exemple une batterie de servitude du véhicule et ses appendices. Cette batterie peut être située en dessous de la nouvelle implantation de la roue de secours, ce qui conduit à surélever cette dernière comme expliqué plus haut. L'ensemble formé par la batterie et la roue de secours représente une masse qui peut être projetée vers le réservoir à carburant lors d'un choc arrière. Les demandes de brevet JPH03182884A, JP2013216206A et US2009/19503A1 divulguent des véhicules selon l'état de la technique illustré ci-dessus. En particulier, JPH03182884A divulgue la combinaison des tous les caractéristiques du préambule de la revendication 1.

L'invention a pour but de pallier tout ou partie des inconvénients précédents en proposant un véhicule adapté à ces nouvelles contraintes.

A cet effet, l'invention a pour objet un véhicule automobile comprenant un soubassement pourvu d'un plancher arrière, le véhicule comprenant également un réservoir à carburant situé à l'avant du plancher arrière, caractérisé en ce que des moyens d'accrochage sont prévu sur un point bas du plancher arrière, ces moyens d'accrochage étant situés sensiblement à la même hauteur qu'une traverse de train arrière du véhicule située en avant des moyens d'accrochage, ces moyens d'accrochage étant conformés pour accrocher un bord longitudinal de la traverse de train arrière lorsque ces moyens d'accrochage sont déplacés vers l'avant par une déformation du plancher arrière sous l'influence d'un choc arrière.

Ainsi les risques d'avancée vers le réservoir à carburant de tout équipement installé sur le plancher arrière sont considérablement réduits.

D'autres caractéristiques avantageuses de l'invention sont définies ci-après.

Le plancher arrière est constitué d'une coque en matériau plastique ou composite, notamment de type SMC (en anglais « Sheet Molding Compound ») supportée latéralement par deux longerons arrière latéraux du soubassement, lesquels s'étendent suivant la direction longitudinale du véhicule, la coque étant également supportée à l'avant par une traverse centrale de soubassement, s'étendant suivant la direction transversale du véhicule.

La coque comprend un renfoncement central ayant la forme générale d'une cuvette apte à recevoir une batterie et/ou une roue de secours.

Les moyens d'accrochage sont constitués d'un crochet métallique embouti, comportant une base fixée sur une face inférieure de la coque, une partie saillante s'étendant perpendiculairement par rapport à la base, cette partie saillante ayant la forme générale d'un L vu de côté dont la branche longue du L est reliée à la base et dont la branche courte forme une arête dirigée vers l'avant du véhicule.

Le crochet comporte des équerres de renfort latérales reliant de chaque côté les bords latéraux de la base aux bords latéraux de la branche longue du L.

Le crochet est fixé à la coque par des vis de fixation traversant la base de façon sensiblement verticale et venant en prise avec un élément de renfort supérieur disposé au moins en partie dans le renfoncement central du plancher arrière.

L'élément de renfort supérieur est une barrière de protection, notamment réalisée en tubes mécano-soudés, la barrière étant située dans une zone avant du renfoncement central et étant fixée sur la structure du soubassement et sur le plancher arrière.

Le crochet est fixé sur une face inférieure d'une zone de la coque ayant la forme générale d'un puits, ladite zone constituant le point bas de la coque.

Deux vis de fixations assurent la fixation simultanée du crochet et d'un point bas de l'élément de renfort supérieur à la coque.

La largeur du crochet considérée suivant la direction transversale est comprise entre 50 mm et 200 mm, la hauteur du crochet considérée suivant la direction verticale est comprise entre 10 mm et 100 mm, la longueur du crochet considérée suivant la direction longitudinale est comprise entre 50 et 200 mm.

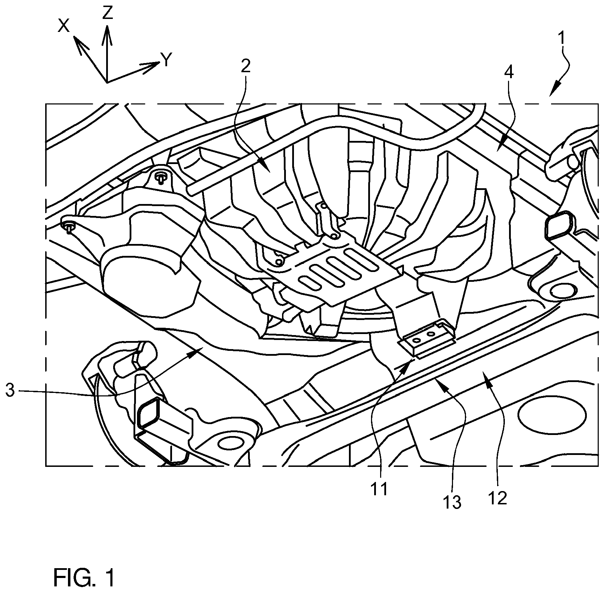

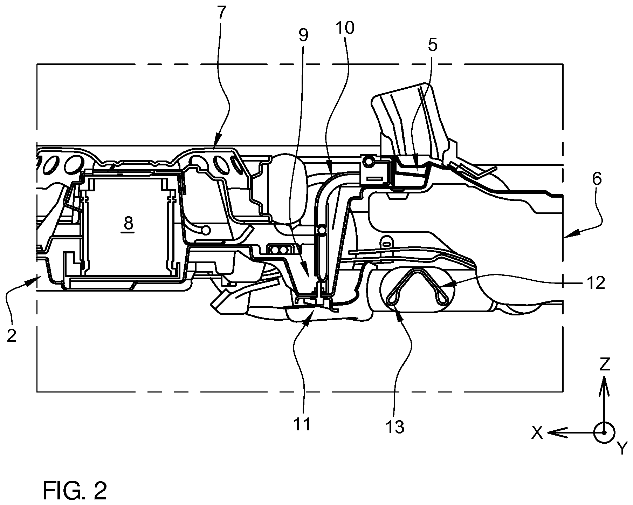

L'invention sera mieux comprise à la lecture de la description suivante d'un exemple non limitatif de l'invention, et à la lumière des dessins annexés.
[fig.1]
   représente une vue en perspective, du dessous de la zone de plancher arrière d'un véhicule automobile selon l'invention.
[fig.2]
   représente une vue en section transversale de coté de la zone de plancher arrière de la figure 1.
[fig.3]
   est une vue agrandie d'un détail de réalisation de la figure 2, illustrant le crochet et la traverse de train arrière.
[fig.4]
   est une vue en perspective du dessus de la zone de plancher arrière du véhicule selon l'invention.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Les notions avant-arrière s'entendent par rapport au sens de marche normal du véhicule qui est dirigé vers l'avant.

Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

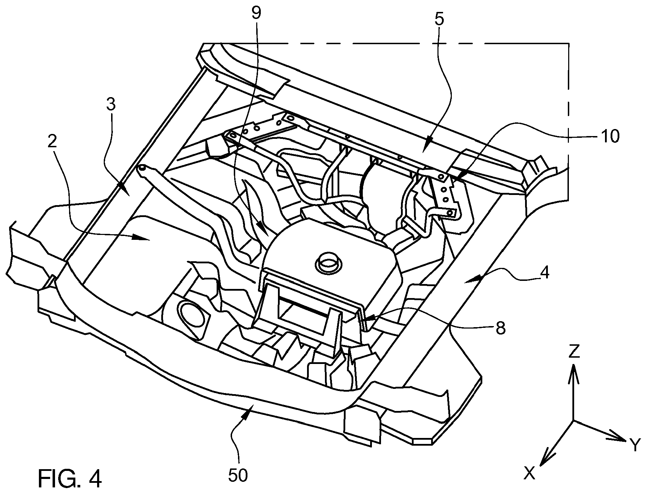

On a représenté aux figures 1 et 4 la partie arrière d'un véhicule automobile 1, limitée à sa zone soubassement. Ce véhicule comprend un plancher arrière 2, réalisé ici en matériau plastique ou composite, par exemple en SMC (en anglais « Sheet Molding Compound »). Ce plancher 2 est supporté latéralement par deux longerons arrière gauche 3 et droit 4 s'étendant sensiblement suivant la direction longitudinale X. A l'avant le plancher 2 est supporté par une traverse centrale 5 s'étendant suivant la direction transversale Y du véhicule. Le plancher 2 est en outre fixé dans sa partie arrière à une traverse arrière 50 s'étendant suivant la direction transversale Y du véhicule (figure 4).

Comme représenté à la figure 2, le véhicule comprend un réservoir à carburant 6 qui est situé à l'avant du plancher arrière 2 et de la traverse centrale 5.

Le véhicule comprend encore une roue de secours 7 qui est situé au-dessus du plancher arrière 2 à une hauteur présentant une zone de recouvrement avec la hauteur d'une zone arrière du réservoir 6.

En effet dans l'exemple illustré, des contraintes d'architecture et d'implantation ont amené à installer une batterie 8 de servitude 12v (figure 4) dans un renfoncement 9 conformé sur le plancher arrière 2. Ce renfoncement 9 a la forme générale d'une cuvette.

Lorsque le véhicule prévoit en option une roue de secours 7 ou galette, celle-ci est ici implantée au-dessus de la batterie 8, de façon sensiblement horizontale, ce qui la place relativement haute dans le véhicule comme indiqué précédemment. On note que la roue est disposée de façon que la partie creuse de la jante soit tournée vers le bas, de façon à accueillir la forme protubérante de la batterie 8 et de ses accessoires (carter etc.).

La zone de recouvrement est considérée suivant la direction verticale Z. Dans l'exemple illustré (figure 2), la moitié inférieure de la hauteur de la roue 7 est situé en vis-à-vis de la partie arrière du réservoir 6. On comprend alors qu'en cas de choc arrière sur le véhicule, la roue de secours 7 peut s'avancer en direction du réservoir 6.

Pour protéger ce dernier, le véhicule selon l'invention comprend une barrière de protection 10 fixée sur la structure du soubassement et sur le plancher arrière 2. Cette barrière de protection 10 est au moins en partie intercalée entre la roue de secours 7 et la zone arrière du réservoir 6 à carburant. La barrière 10 est accolée à une paroi avant du renfoncement 9. Cette barrière de protection 10 est ainsi disposée pour limiter le déplacement longitudinal de la roue de secours 7. La forme de la barrière 10 est définie de façon à assurer une cinématique de déformation qui évite l'intrusion de la roue de secours 7 dans l'espace de sécurité du réservoir à carburant 6, ce qui permet de respecter les contraintes réglementaires.

La barrière de protection 10 est typiquement réalisée en tubes métalliques mécano-soudés (figures 2 et 4). La structure tubulaire de la barrière de protection est constituée de tubes en acier ayant une épaisseur de l'ordre de 2 mm.

La barrière comporte une extension inférieure qui pénètre dans le renfoncement 9.

Selon l'invention des moyens d'accrochage 11 complémentaires ou alternatifs à cette barrière de protection 10 sont prévus sur un point bas du plancher arrière, comme cela est illustré aux figures 1 à 3.

Ces moyens d'accrochage 11 sont situés sensiblement à la même hauteur qu'une traverse 12 de train arrière du véhicule, qui est située en avant des moyens d'accrochage 11. Plus précisément ces moyens d'accrochage 11 sont situés à la même hauteur ou légèrement en dessous de la traverse 12 de train arrière.

Les moyens d'accrochage 11 sont conformés pour accrocher un bord longitudinal 13 de la traverse 12 lorsque ces moyens d'accrochage sont déplacés vers l'avant par une déformation du plancher arrière 2 sous l'influence d'un choc arrière.

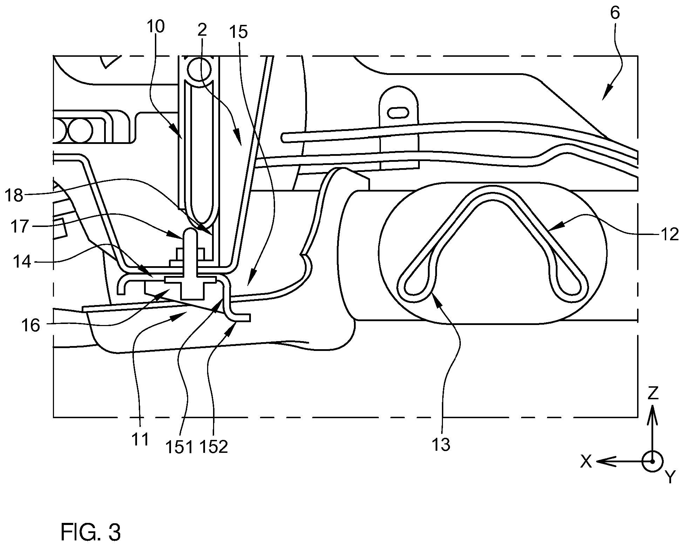

En référence à la figure 3, les moyens d'accrochage 11 sont constitués d'un crochet métallique embouti ou plié, comportant une base 14 plate. Celle-ci est fixée sur une face inférieure de la coque, qui présente dans cette zone la forme générale d'un puits, prolongeant encore le renfoncement 9. Le crochet est fixé au point le plus bas de ce puits, sur une face inférieure, c'est-à-dire tournée vers le bas. Le crochet comporte également une partie saillante 15 s'étendant perpendiculairement par rapport à la base 14, cette partie saillante ayant la forme générale d'un L vu de côté dont la branche longue 151 du L est reliée à la base 14 et dont la branche courte 152 forme une arête dirigée vers l'avant du véhicule.

Le crochet comporte également des équerres de renfort latérales 16 reliant de chaque côté les bords latéraux de la base 14 aux bords latéraux de la branche longue 151 du L.

Le crochet constituant les moyens d'accrochage 11 est fixé à la coque par des vis de fixation 17 traversant la base 14 de façon sensiblement verticale, du bas vers le haut, et venant en prise avec un élément de renfort supérieur disposé au moins en partie dans le renfoncement central 9 du plancher arrière. Très avantageusement, l'élément de renfort est une partie inférieure 18 de la barrière de protection 10 décrite précédemment. Cette partie inférieure 18 comprend un ou plusieurs tubes prolongés par des platines en appui sur une face supérieure du plancher arrière. Cette face supérieure est ici située à l'opposé de la base du crochet des moyens d'accrochage 11 de sorte que la partie inférieure 18 de la barrière 10 et la base 14 du crochet prennent en sandwich une même paroi de la coque. Le serrage des vis 17 qui sont en prise avec des trous taraudés prévus dans la barrière de protection assure une fixation complète des moyens d'accrochage 11. Cette barrière 10 qui est fixée par ailleurs à la structure du véhicule et au plancher arrière 2, comme expliqué précédemment, contribue à répartir efficacement les efforts supportés par les moyens d'accrochage 11 de sorte que ces derniers sont fermement maintenus et renforcés sur le plancher arrière.

Les dimensions du crochet sont par exemple mais de façon non limitative :
- une largeur suivant la direction transversale Y qui est comprise entre 50 mm et 200 mm,
- une hauteur suivant la direction verticale Z qui est comprise entre 10 mm et 100 mm,
- une longueur suivant la direction longitudinale X qui est comprise entre 50 et 200 mm.

On note que la distance entre le crochet et le bord 13 de la traverse de train arrière sur lequel le crochet vient en prise en cas de choc est de l'ordre de 100 à 300 mm, par exemple environ 200, cette valeur n'étant pas limitative.

Comme on le voit en outre à la figure 3, la traverse de train arrière 12 a une forme générale en V inversé, le plan entre les deux pans du V formant un angle d'environ 80°. Les pans du V ont des bords libres inférieurs 13 s'étendant suivant la direction transversale Y du véhicule et présentent des bourrelets formés par une double épaisseur de tôle destinés à rigidifier la traverse 12.

Bien entendu, l'invention n'est pas limitée aux modes ou variantes de réalisation décrits précédemment et comprends tous les équivalents techniques de ces moyens.

## Revendications

1. Véhicule automobile (1) comprenant un soubassement pourvu d'un plancher arrière (2), le véhicule comprenant également un réservoir (6) à carburant situé à l'avant du plancher arrière (2), **caractérisé en ce que** des moyens d'accrochage (11) sont prévu sur un point bas du plancher arrière, ces moyens d'accrochage (11) étant situés sensiblement à la même hauteur qu'une traverse (12) de train arrière du véhicule située en avant des moyens d'accrochage (11), ces moyens d'accrochage (11) étant conformés pour accrocher un bord longitudinal (13) de la traverse (12) de train arrière lorsque ces moyens d'accrochage (11) sont déplacés vers l'avant par une déformation du plancher arrière (2) sous l'influence d'un choc arrière.

2. Véhicule selon la revendication 1, **caractérisé en ce que** le plancher arrière (2) est constitué d'une coque en matériau plastique ou composite, notamment de type SMC (en anglais « Sheet Molding Compound ») supportée latéralement par deux longerons arrière (3 ; 4) latéraux du soubassement, lesquels s'étendent suivant la direction longitudinale (X) du véhicule, la coque étant également supportée à l'avant par une traverse centrale (5) de soubassement, s'étendant suivant la direction (Y) transversale du véhicule.

3. Véhicule selon la revendication 1 ou 2, **caractérisé en ce que** la coque comprend un renfoncement central (9) ayant la forme générale d'une cuvette apte à recevoir une batterie (8) et/ou une roue de secours (7).

4. Véhicule selon la revendication 3, **caractérisé en ce que** les moyens d'accrochage (11) sont constitués d'un crochet métallique embouti, comportant une base (14) fixée sur une face inférieure de la coque, une partie saillante (15) s'étendant perpendiculairement par rapport à la base (14), cette partie saillante ayant la forme générale d'un L vu de côté dont la branche longue (151) du L est reliée à la base (15) et dont la branche courte (152) forme une arête dirigée vers l'avant du véhicule.

5. Véhicule selon la revendication 4, **caractérisé en ce que** le crochet comporte des équerres (16) de renfort latérales reliant de chaque côté les bords latéraux de la base (14) aux bords latéraux de la branche longue (151) du L.

6. Véhicule selon la revendication 5, **caractérisé en ce que** le crochet est fixé à la coque par des vis de fixation (17) traversant la base (14) de façon sensiblement verticale et venant en prise avec un élément de renfort supérieur disposé au moins en partie dans le renfoncement central (9) du plancher arrière (2).

7. Véhicule selon la revendication 6, **caractérisé en ce que** l'élément de renfort supérieur est une barrière de protection (10), notamment réalisée en tubes mécano-soudés, la barrière (10) étant située dans une zone avant du renfoncement central (9) et étant fixée sur la structure du soubassement et sur le plancher arrière (2).

8. Véhicule selon la revendication 6 ou 7, **caractérisé en ce que** le crochet est fixé sur une face inférieure d'une zone de la coque ayant la forme générale d'un puits, ladite zone constituant le point bas de la coque.

9. Véhicule selon l'une quelconque des revendications 6 à 8, **caractérisé en ce que** deux vis de fixations (17) assurent la fixation simultanée du crochet et d'un point bas de l'élément de renfort supérieur à la coque.

10. Véhicule selon l'une quelconque des revendications 5 à 9, caractérisé en ce la largeur du crochet () considérée suivant la direction transversale (Y) est comprise entre 50 mm et 200 mm, la hauteur du crochet considérée suivant la direction verticale (Z) est comprise entre 10 mm et 100 mm, la longueur du crochet considérée suivant la direction longitudinale (X) est comprise entre 50 et 200 mm

## Patentansprüche

1. Kraftfahrzeug (1), umfassend einen Unterrahmen, der mit einem hinteren Boden (2) versehen ist, wobei das Fahrzeug ferner einen Kraftstofftank (6) umfasst, der an der Vorderseite des hinteren Bodens (2) angeordnet ist, **dadurch gekennzeichnet, dass** an einem unteren Punkt des hinteren Bodens Koppelmittel (11) vorgesehen sind, wobei diese Koppelmittel (11) im Wesentlichen auf derselben Höhe wie ein Hinterachsenquerträger (12) des Fahrzeugs angeordnet sind, der vor den Koppelmitteln (11) angeordnet ist, wobei diese Koppelmittel (11) ausgebildet sind, einen Längsrand (13) des Hinterachsenquerträgers (12) anzukoppeln, wenn diese Koppelmittel (11) durch eine Deformation des hinteren Bodens (2) unter Einwirkung eines Heckaufpralls nach vorne verschoben werden.

2. Fahrzeug nach Anspruch 1, **dadurch gekennzeichnet, dass** der hintere Boden (2) aus einer Schale aus Kunststoff- oder Verbundmaterial, insbesondere der SMC-Art (SMC - Sheet Molding Compound), besteht, die seitlich von zwei hinteren seitlichen Längsträgern (3; 4) des Unterrahmens getragen wird, die sich entlang der Längsrichtung (X) des Fahrzeugs erstrecken, wobei die Schale ferner vorne von einem mittleren Unterrahmenquerträger (5) getragen wird, der sich entlang der Querrichtung (Y) des Fahrzeugs erstreckt.

3. Fahrzeug nach Anspruch 1 oder 2, **dadurch gekennzeichnet, dass** die Schale eine mittlere Vertiefung (9) umfasst, die die allgemeine Form einer Mulde hat, die zur Aufnahme einer Batterie (8) und/oder eines Reserverads (7) geeignet ist.

4. Fahrzeug nach Anspruch 3, **dadurch gekennzeichnet, dass** die Koppelmittel (11) aus einem tiefgezogenen Metallhaken bestehen, der eine Basis (14) aufweist, die an einer unteren Fläche der Schale befestigt ist, wobei sich ein vorstehender Teil (15) senkrecht zu der Basis (14) erstreckt, wobei dieser vorstehende Teil von der Seite gesehen allgemein L-förmig ist, wobei der lange Schenkel (151) des L mit der Basis (15) verbunden ist und wobei der kurze Schenkel (152) eine zur Vorderseite des Fahrzeugs gerichtete Kante bildet.

5. Fahrzeug nach Anspruch 4, **dadurch gekennzeichnet, dass** der Haken seitliche Verstärkungswinkelstücke (16) aufweist, die die seitlichen Ränder der Basis (14) von jeder Seite mit den seitlichen Rändern des langen Schenkels (151) des L verbinden.

6. Fahrzeug nach Anspruch 5, **dadurch gekennzeichnet, dass** der Haken mittels Befestigungsschrauben (17) an der Schale befestigt ist, die die Basis (14) im Wesentlichen vertikal durchqueren und mit einem oberen Verstärkungselement in Eingriff stehen, das mindestens teilweise in der mittleren Vertiefung (9) des hinteren Bodens (2) angeordnet ist.

7. Fahrzeug nach Anspruch 6, **dadurch gekennzeichnet, dass** das obere Verstärkungselement eine insbesondere aus maschinengeschweißten Rohren hergestellte Schutzsperre (10) ist, wobei die Sperre (10) in einem vorderen Bereich der mittleren Vertiefung (9) angeordnet und an der Struktur des Unterrahmens und an dem hinteren Boden (2) befestigt ist.

8. Fahrzeug nach Anspruch 6 oder 7, **dadurch gekennzeichnet, dass** der Haken an einer unteren Fläche eines Bereichs der Schale befestigt ist, der allgemein napfförmig ist, wobei der Bereich den unteren Punkt der Schale darstellt.

9. Fahrzeug nach einem der Ansprüche 6 bis 8, **dadurch gekennzeichnet, dass** zwei Befestigungsschrauben (17) die gleichzeitige Befestigung des Hakens und eines unteren Punkts des oberen Verstärkungselements an der Schale gewährleisten.

10. Fahrzeug nach einem der Ansprüche 5 bis 9, **dadurch gekennzeichnet, dass** die Breite des Hakens, in der Querrichtung (Y) gesehen, zwischen 50 mm und 200 mm beträgt, die Höhe des Hakens, in der vertikalen Richtung (Z) gesehen, zwischen 10 mm und 100 mm beträgt und die Länge des Hakens, in der Längsrichtung (X) gesehen, zwischen 50 mm und 200 mm beträgt.

## Claims

1. Motor vehicle (1) comprising an understructure provided with a rear floor (2), the vehicle also comprising a fuel tank (6) situated at the front of the rear floor (2), **characterized in that** catching means (11) are provided on a low point of the rear floor, these catching means (11) being situated substantially at the same height as a rear axle assembly crossmember (12) of the vehicle that is situated in front of the catching means (11), these catching means (11) being shaped so as to catch a longitudinal edge (13) of the rear axle assembly crossmember (12) when these catching means (11) are moved towards the front by a deformation of the rear floor (2) under the influence of a rear impact.

2. Vehicle according to Claim 1, **characterized in that** the rear floor (2) is constituted of a shell made of plastic or composite material, in particular of SMC (Sheet Moulding Compound) type, supported laterally by two rear lateral side members (3; 4) of the understructure, which extend in the longitudinal direction (X) of the vehicle, the shell also being supported at the front by a central understructure crossmember (5), extending in the transverse direction (Y) of the vehicle.

3. Vehicle according to Claim 1 or 2, **characterized in that** the shell comprises a central indentation (9) having the overall shape of a bowl able to receive a battery (8) and/or a spare wheel (7).

4. Vehicle according to Claim 3, **characterized in that** the catching means (11) are constituted of a stamped metal hook, having a base (14) fastened to a lower face of the shell, a protruding part (15) extending perpendicularly with respect to the base (14), this protruding part having the overall shape of an L seen from the side, of which the long leg (151) of the L is connected to the base (15) and of which the short leg (152) forms an edge directed towards the front of the vehicle.

5. Vehicle according to Claim 4, **characterized in that** the hook has lateral reinforcing brackets (16) connecting, on each side, the lateral edges of the base (14) to the lateral edges of the long leg (151) of the L.

6. Vehicle according to Claim 5, **characterized in that** the hook is fastened to the shell by fastening screws (17) passing through the base (14) in a substantially vertical manner and engaging with an upper reinforcing element disposed at least in part in the central indentation (9) of the rear floor (2).

7. Vehicle according to Claim 6, **characterized in that** the upper reinforcing element is a protective barrier (10), in particular made from mechanically welded tubes, the barrier (10) being situated in a front zone of the central indentation (9) and being fastened to the structure of the understructure and to the rear floor (2) .

8. Vehicle according to Claim 6 or 7, **characterized in that** the hook is fastened to a lower face of a zone of the shell having the overall shape of a well, said zone constituting the low point of the shell.

9. Vehicle according to any one of Claims 6 to 8, **characterized in that** two fastening screws (17) ensure the simultaneous fastening of the hook and of a low point of the upper reinforcing element to the shell.

10. Vehicle according to any one of Claims 5 to 9, **characterized in that** the width of the hook considered in the transverse direction (Y) is between 50 mm and 200 mm, the height of the hook considered in the vertical direction (Z) is between 10 mm and 100 mm, the length of the hook considered in the longitudinal direction (X) is between 50 and 200 mm.
